# EUROPÄISCHE PATENTSCHRIFT

(11) **EP 2 752 511 B1**
(45) Veröffentlichungstag und Bekanntmachung des Hinweises auf die Patenterteilung: **05.06.2019**
(21) Anmeldenummer: 13006042.9
(22) Anmeldetag: 23.12.2013
(51) Int. Cl.: D01G 11/00

(54) **Verfahren und Vorrichtung zum Trennen von Nähfäden und Karbonfasern**
Process and apparatus for separating sewing threads and carbon fibers
Procédé et dispositif pour séparer des fils de couture et des fibres de carbone

(30) Priorität: 26.12.2012 DE 102012025181
(43) Veröffentlichungstag der Anmeldung: 09.07.2014
(73) Patentinhaber: Hergeth, Hubert, 6300 Zug (CH)
(72) Erfinder: Hergeth, Hubert, 6300 Zug (CH)
(74) Vertreter: Hoffmann Eitle

(56) Entgegenhaltungen:
- EP-A2- 1 438 449
- DD-A1- 217 546

## Beschreibung

Die vorliegende Erfindung betrifft ein Verfahren und eine Vorrichtung zum Trennen von Nähfäden und Karbonfasern.

Bei der Verarbeitung von Karbonfasermatten zu Formteilen werden zur Fixierung der Matten Nähfäden eingesetzt. Werden die Formteile beschnitten, entstehen nicht weiterverarbeitete Stücke, die recycelt werden. Bei der Wiederverarbeitung stören die Nähfäden, da sie wie "Sollbruchstellen" wirken. Diese recycelten Fasern sind durch die Nähfäden nur für untergeordnete Fälle einsetzbar und somit von geringem Wert. Die Nähfäden, d. h. auch die Verbindungsfäden, bestehen nicht aus dem gleichen Material wie die Karbonfasern der Matten.

Es liegt nahe, die Nähfäden, die eine andere Farbe als Karbon haben, mit einem optischen Sorter, z. B. dem CUBiSCAN, aus einem Faser-Luft-Strom auszusortieren. Dies hat den Nachteil, dass die recycelten Teile in kleine Stücke zerrissen werden müssen. Die Fäden werden nicht vollständig erfasst und entfernt.

Die Patentschrift DD-A1-217 546 offenbart ein Verfahren und eine Vorrichtung zur Rückgewinnung von Fasern aus textilen Flächengebilden, Fäden oder dergleichen.

Aufgabe der Erfindung ist es, eine Möglichkeit zu schaffen, die Nähfäden auf schonende Weise möglichst vollständig von den Karbonmatten zu trennen, um so die Karbonfasern wiederzugewinnen, ohne dass die Karbonfasern geschädigt werden und so dass die Karbonfasern frei von Nähfäden sind.

Erfindungsgemäß geschieht dies mit einem Verfahren nach Anspruch 1 und einer Vorrichtung nach Anspruch 10, indem nicht die Farbe der Nähfäden (weiß) gegenüber den Karbonfasern (schwarz) genutzt wird, sondern die unterschiedlichen mechanischen Eigenschaften von Nähfäden und Karbonfasern, insbesondere Steifigkeit und Oberflächenstruktur.

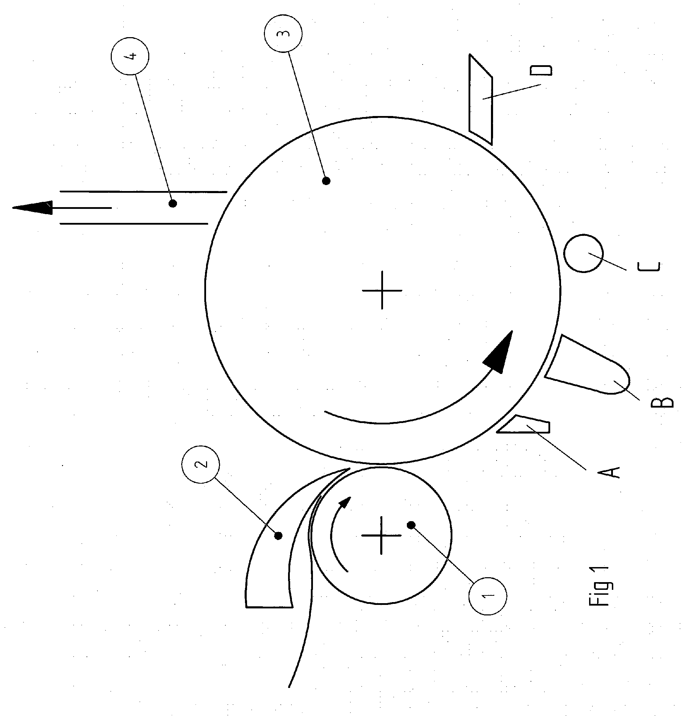

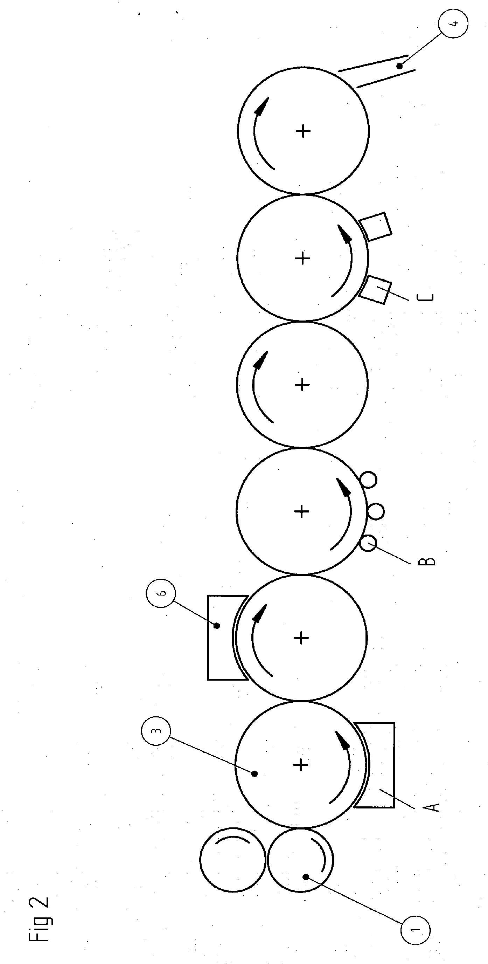

Die Erfindung wird anhand der Figuren 1 und 2 erläutert.

Fig. 1 zeigt eine erfindungsgemäße Vorrichtung zum Trennen von Nähfäden und Karbonfasern mit einer Walze 3, die am Umfang mit einer Garnitur (nicht gezeichnet) versehen ist. Über eine Einzugswalze 1 und ein Führungselement 2 werden Karbonfasermattenstücke der schneller drehenden Walze 3 zugeliefert.

Dadurch werden die Mattenstücke aufgelöst. Die noch unaufgelösten Teile werden durch Formelemente A, B, C auf der Walze gehalten. An den freien Flächen und Kanten (z. B. D) werden Karbonfasern ausgeschieden.

Die Karbonfasern können in einem Auffangraum 5 gesammelt werden oder abgesaugt werden. Sind die Karbonfasern abgeschieden, werden die auf der Garnitur anhaftenden Nähfäden abgesaugt. Eine Absaugeinrichtung ist mit 4 bezeichnet. Sind die Nähfäden abgesaugt, können neue Karbonmattenstücke eingespeist werden.

Fig. 2 zeigt eine andere Ausführung mit mehreren garnierten Walzen (hintereinander arbeitend). Die mit Nähfäden versetzten Fasermatten-Abschnitte und Fasern werden durch den Einzug 1 aus zwei Einzugszylindern der ersten garnierten Walze 3 zugeführt. Die Karbonfasern und Nähfäden werden von einer Walze zur anderen übertragen und durch die Übertragung und Kardierelemente 6 weiter aufgelöst. Aus den Fasermatten herausgelöste Karbonfasern fallen durch die Schwerkraft nach unten in den Auffangbereich 5 und werden abgefördert. Noch nicht abgelöste Karbonfasern und die Nähfäden, die bedingt durch ihre weniger glatte Oberfläche und ihre höhere Biegsamkeit in der Garnitur besser verhaften, werden an die nächste mit höherer Oberflächengeschwindigkeit drehenden Walze übergeben. Auf der letzten Walze befinden sich fast nur noch Nähfäden, die durch eine Absaugvorrichtung 4 oder Abnahmevorrichtung von der Walze kontinuierlich abgefördert werden.

Auf die vorgetragene Weise können Nähfäden und die teuren Karbonfasern schonend und mit einer hohen Zuverlässigkeit getrennt werden.

## Patentansprüche

1. Verfahren zum Trennen von Nähfäden und Karbonfasern,
bei welchem mit Nähfäden versetzte Karbonfasermatten, Karbonfasermattenstücke oder Karbonfaseragglomerationen mindestens einer sich drehenden garnierten Walze (3) zugeführt und so zu Fasern und Faserbüscheln aufgelöst werden, und die Fasern und Faserbüschel von der zumindest einen Walze (3) mitgenommen werden, wodurch sich zumindest ein Teil der Karbonfasern von der Walze oder den Walzen ablöst, während zumindest ein Teil der Nähfäden an zumindest einer der Walzen verbleibt,
wobei die Ablösung der Karbonfasern von der Garnitur der Walze (3) durch
- Schwerkraft,
- Zentrifugalkraft,
- einen Luftstrom,
- die Verwendung eines elektrostatischen Feldes,
- Formelemente (A, B, C), die sich parallel zur Achse der Walze über die Arbeitsbreite erstrecken,
oder eine Kombination zumindest zweier dieser Maßnahmen beeinflusst wird, und
wobei die Nähfäden von zumindest einer der Walzen abgenommen werden.

2. Verfahren nach Anspruch 1, bei welchem die Fasern und Faserbüschel solange von der zumindest einen Walze (3) mitgenommen werden, bis sich mindestens 90 % der Karbonfasern von der Walze oder den Walzen abgelöst haben.

3. Verfahren nach einem der vorangehenden Ansprüche, bei welchem die Karbonfasern und Nähfäden von einer ersten Walze mitgenommen werden und an eine weitere Walze übergeben werden, die vorzugsweise mit einer höheren Oberflächengeschwindigkeit dreht als die erste Walze.

4. Verfahren nach Anspruch 3, bei welchem die Übergabe der Karbonfasern und Nähfäden von Walze zu Walze mehrmals, vorzugsweise mindestens fünf Mal bei mindestens sechs hintereinander vorgesehenen Walzen erfolgt, wobei sich vorzugsweise jede Walze mit einer höheren Oberflächengeschwindigkeit dreht als die jeweils vorangehende Walze.

5. Verfahren nach einem der vorangehenden Ansprüche, bei welchem die Nähfäden von der letzten Walze in einer Reihe von Walzen abgenommen werden.

6. Verfahren nach einem der Ansprüche 1 bis 5, bei welchem die Abnahme der Nähfäden durch Absaugen, einen Hacker oder ein Abzugswalzensystem erfolgt.

7. Verfahren nach einem der Ansprüche 1 bis 6, bei welchem die Walze stillgesetzt wird und dann die Nähfäden abgenommen werden.

8. Verfahren nach einem vorangehenden Ansprüche, bei welchem gegenüber der Walzenoberfläche vorgesehene Kardierwalzen oder Kardierelemente (6) die Fasern bearbeiten.

9. Vorrichtung zum Trennen von Nähfäden und Karbonfasern,
mit mindestens einer sich drehenden garnierten Walze (3) zum Auflösen von mit Nähfäden versetzten Karbonfasermatten, Karbonfasermattenstücken oder Karbonfaseragglomerationen zu Fasern und Faserbüscheln,
wobei die Vorrichtung so ausgestaltet ist, dass sie eine Einrichtung zum Beeinflussen der Ablösung der Karbonfasern von der Garnitur zumindest einer Walze (3) durch
- Schwerkraft,
- Zentrifugalkraft,
- einen Luftstrom,
- die Verwendung eines elektrostatischen Feldes,
- Formelemente (A, B, C), die sich parallel zur Achse der Walze über die Arbeitsbreite der Walze erstrecken,
oder eine Kombination zumindest zweier dieser Maßnahmen aufweist, und
wobei die Vorrichtung eine Einrichtung zum Abnehmen von an der Garnitur der Walze (3) anhaftenden Nähfäden aufweist.

10. Vorrichtung nach Anspruch 9, die mehrere und vorzugsweise mindestens sechs Walzen aufweist, die hintereinander angeordnet sind, so dass die Karbonfasern und Nähfäden von Walze zu Walze übergeben werden, wobei sich vorzugsweise jede Walze mit einer höheren Oberflächengeschwindigkeit dreht als die jeweils vorangehende Walze.

11. Vorrichtung nach Anspruch 9 oder 10, bei welcher die Garnitur der Walze(n) aus Sägezahndraht oder flexiblen Drähten, flexibel gelagerten Drähten oder Profilen besteht.

12. Vorrichtung nach einem der Ansprüche 9 bis 11, weiter mit einer Einrichtung zum Auffangen oder Absaugen der Karbonfasern von zumindest einer Walze (3).

13. Vorrichtung nach einem der Ansprüche 9 bis 12, bei welcher die Einrichtung zum Abnehmen der Nähfäden von zumindest einer Walze (3) eine Absaugeinrichtung, ein Hacker oder ein Abzugswalzensystem ist.

## Claims

1. Process for separating sowing threads and carbon fibres,
wherein carbon fibre mats, pieces of carbon fibre mats or carbon fibre agglomerations mixed with sowing threads are fed to at least one rotating clothed roller (3) and so separated into fibres and fibre bundles, and the fibres and fibre bundles are carried along by the at least one roller (3), as a result of which at least a part of the carbon fibres is detached from the roller or the rollers, while at least a part of the sowing threads remains on at least one of the rollers,
wherein the detachment of the carbon fibres from the clothing of the roller (3) is influenced through
- gravity,
- centrifugal force,
- an air flow,
- the use of an electrostatic field,
- shaped elements (A, B, C) which extend parallel to the axis of the roller over the working width,
or a combination of at least two of these measures, and
wherein the sowing threads are removed from at least one of the rollers.

2. Process according to claim 1, wherein the fibres and fibre bundles are carried along by the at least one roller (3) until at least 90 % of the carbon fibres have been detached from the roller or the rollers.

3. Process according to one of the preceding claims, wherein the carbon fibres and sowing threads are carried along by a first roller and transferred onto a further roller which preferably rotates at a higher surface speed than the first roller.

4. Process according to claim 3, wherein the transfer of the carbon fibres and sowing threads from roller to roller takes place several times, preferably at least five times with at least six rollers arranged behind one another, wherein each roller preferably rotates at a higher surface speed than the in each case preceding roller.

5. Process according to one of the preceding claims, wherein the sowing threads are removed from the last roller in a series of rollers.

6. Process according to one of the claims 1 to 5, wherein the removal of the sowing threads takes place through suction, a hacker or a take-off roller system.

7. Process according to one of the claims 1 to 6, wherein the roller is stopped and the sowing threads are then removed.

8. Process according to one of the preceding claims, wherein carding rollers or carding elements (6) arranged opposite the surface of the rollers process the fibres.

9. Apparatus for separating sowing threads and carbon fibres, with at least one rotating clothed roller (3) for separating carbon fibre mats, pieces of carbon fibre mats or carbon fibre agglomerations mixed with sowing threads into fibres and fibre bundles,
wherein the apparatus is configured such that it includes a device for influencing the detachment of the carbon fibres from the clothing of at least one roller (3) through
- gravity,
- centrifugal force,
- an air flow,
- the use of an electrostatic field,
- shaped elements (A, B, C) which extend parallel to the axis of the roller over the working width of the roller,
or a combination of at least two of these measures, and
wherein the apparatus includes a device for removing sowing threads adhering to the clothing of the roller (3).

10. Apparatus according to claim 9 which has several and preferably at least six rollers which are arranged behind one another, so that the carbon fibres and sowing threads are transferred from roller to roller, wherein each roller preferably rotates at a higher surface speed than the in each case preceding roller.

11. Apparatus according to claim 9 or 10, wherein the clothing of the roller(s) consists of sawtooth wire or flexible wires, flexibly mounted wires or profiles.

12. Apparatus according to one of the claims 9 to 11, further comprising a device for collecting or sucking up the carbon fibres from at least one roller (3).

13. Apparatus according to one of the claims 9 to 12, wherein the device for removing the sowing threads from at least one roller (3) is a suction device, a hacker or a take-off roller system.

## Revendications

1. Procédé de séparation de fils de couture et de fibres de carbone,
dans lequel des nattes de fibres de carbone, des morceaux de nattes de fibres de carbone ou des agglomérats de fibres de carbone, mélangés à des fils de couture, sont conduits à au moins un cylindre (3) garni et rotatif et sont ainsi décomposés en fibres et flocons de fibres, et les fibres et flocons de fibres sont emportés par l'au moins un cylindre (3), au moins une partie des fibres de carbone se détachant alors du cylindre ou des cylindres tandis qu'au moins une partie des fils de couture reste sur au moins un des cylindres,
dans lequel le détachement des fibres de carbone de la garniture du cylindre (3) est influencé par
- gravité,
- force centrifuge,
- un courant d'air,
- l'utilisation d'un champ électrostatique,
- des éléments géométriques (A, B, C) qui s'étendent parallèlement à l'axe du cylindre sur toute la largeur de travail,
ou une combinaison d'au moins deux de ces mesures, et
dans lequel les fils de couture sont enlevés d'au moins un des cylindres.

2. Procédé selon la revendication 1, dans lequel les fibres et flocons de fibres sont emportés par l'au moins un cylindre (3) jusqu'à ce qu'au moins 90 % de fibres de carbone se soient détachées du cylindre ou des cylindres.

3. Procédé selon l'une quelconque des revendications précédentes, dans lequel les fibres de carbone et fils de couture sont emportés par un premier cylindre et transférés sur un autre cylindre qui tourne de préférence avec une vitesse superficielle supérieure à celle du premier cylindre.

4. Procédé selon la revendication 3, dans lequel le transfert des fibres de carbone et fils de couture de cylindre à cylindre s'effectue plusieurs fois, de préférence au moins cinq fois avec au moins six cylindres prévus les uns derrière les autres, chaque cylindre tournant alors de préférence avec une vitesse superficielle supérieure à celle du cylindre respectivement précédent.

5. Procédé selon l'une quelconque des revendications précédentes, dans lequel les fils de couture sont enlevés du dernier cylindre dans une rangée de cylindres.

6. Procédé selon l'une quelconque des revendications 1 à 5, dans lequel l'enlèvement des fils de couture s'effectue par aspiration, par un peigne détacheur ou par un système de cylindre délivreur.

7. Procédé selon l'une quelconque des revendications 1 à 6, dans lequel les cylindres sont immobilisés et les fils de couture sont ensuite enlevés.

8. Procédé selon l'une quelconque des revendications précédentes, dans lequel des cylindres ou éléments de cardage (6) prévus en face de la surface de cylindre traitent les fibres.

9. Dispositif de séparation de fils de couture et de fibres de carbone,
avec au moins un cylindre (3) garni et rotatif pour décomposer des nattes de fibres de carbone, des morceaux de nattes de fibres de carbone ou des agglomérats de fibres de carbone, mélangés à des fils de couture, en fibres et flocons de fibres,
dans lequel le dispositif est conçu de telle sorte qu'il comporte un dispositif pour influencer le détachement des fibres de carbone de la garniture d'au moins un cylindre (3) par
- gravité,
- force centrifuge,
- un courant d'air,
- l'utilisation d'un champ électrostatique,
- des éléments géométriques (A, B, C) qui s'étendent parallèlement à l'axe du cylindre sur toute la largeur de travail du cylindre,
- ou une combinaison d'au moins deux de ces mesures, et
dans lequel le dispositif comporte un dispositif pour enlever des fils de couture adhérant à la garniture du cylindre (3).

10. Dispositif selon la revendication 9, qui comporte plusieurs et de préférence au moins six cylindres qui sont agencés les uns derrière les autres de telle sorte que les fibres de carbone et fils de couture sont transférés de cylindre à cylindre, dans lequel de préférence chaque cylindre tourne avec une vitesse superficielle supérieure à celle du cylindre respectivement précédent.

11. Dispositif selon la revendication 9 ou 10, dans lequel la garniture du ou des cylindres est constituée de fils métalliques en dents de scie ou de fils métalliques flexibles, de fils métalliques ou profilés logés de manière flexible.

12. Dispositif selon l'une quelconque des revendications 9 à 11, en outre avec un dispositif pour attraper ou aspirer les fibres de carbone d'au moins un cylindre (3).

13. Dispositif selon l'une quelconque des revendications 9 à 12, dans lequel le dispositif destiné à enlever les fils de couture d'au moins un cylindre (3) est un dispositif aspirateur, un peigne détacheur ou un système de cylindre délivreur.
